# FASCICULE DE BREVET EUROPEEN

(11) **EP 1 766 457 B1**
(45) Date de publication et mention de la délivrance du brevet: **28.01.2015**
(21) Numéro de dépôt: 05781795.9
(22) Date de dépôt: 21.06.2005
(51) Int. Cl.: G02B 27/01

(54) **AFFICHEUR OPHTALMIQUE COMPORTANT UN DISPOSITIF DE REGLAGE DE LA FOCALISATION**
OPHTHALMOLOGISCHE ANZEIGE MIT FOKUSEINSTELLUNGSVORRICHTUNG
OPHTHALMOLOGIC DISPLAY COMPRISING A FOCUS ADJUSTING DEVICE

(30) Priorité: 02.07.2004 FR 0451425
(43) Date de publication de la demande: 28.03.2007
(73) Titulaire: ESSILOR INTERNATIONAL (Compagnie Générale d'Optique), 94227 Charenton le Pont (FR)
(72) Inventeur: MOLITON, Renaud, F-94227 CHARENTON-LE-PONT (FR); ROUSSEAU, Benjamin, F-94227 CHARENTON-LE-PONT (FR)
(74) Mandataire: Lenne, Laurence
(86) Numéro de dépôt international: PCT/FR2005/050474
(87) Numéro de publication internationale: WO 2006/013297

(56) Documents cités:
- EP-A- 0 543 718
- EP-A- 0 592 318
- US-A- 2 847 901
- US-A- 4 307 941
- US-A- 5 886 822

## Description

La présente invention concerne un afficheur ophtalmique comportant une lentille ophtalmique et un imageur optique destiné à permettre la projection d'informations, de type images ou multimédia. Est ici appelée « lentille » un système optique qui peut notamment être positionné dans une monture de lunettes.

Il est connu du brevet US 5 886 822 de réaliser une lentille ophtalmique présentant un insert de projection. Un tel insert de projection est constitué d'un imageur optique destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

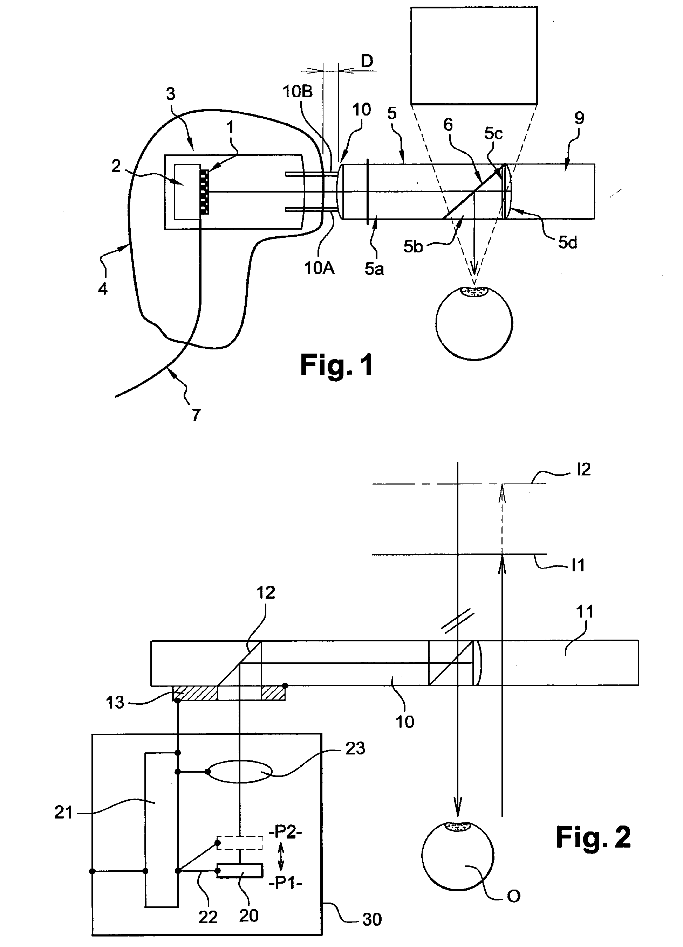

Un exemple d'afficheur connu est représenté dans son environnement plus précisément sur la figure 1.

A titre d'exemple, l'imageur optique est du même type que celui décrit dans le brevet US 5 886 822 déjà mentionné.

Un signal électronique porteur d'une information est amené à un écran miniature 1 par un câble 7. A partir de ce signal, l'écran miniature 1, éclairé par un projecteur de fond 2, génère une image pixellisée correspondant à l'information. A titre d'exemple, il peut être utilisé un écran « KOPIN Cyberdisplay 320 color » générant des images de 320 x 240 pixels et d'une dimension de 4,8 mm x 3,6 mm. L'écran 1 est référencé au moyen d'une interface mécanique 3 par rapport à l'imageur optique 5. Une coque de protection 4 protège tout ou partie de l'ensemble.

Cet imageur optique 5 se compose ici d'un prisme de propagation 5a, d'un contre-prisme 5b, d'une lame quart d'onde 5c et d'un miroir de Mangin sphérique 5d. Le miroir de Mangin sphérique est une lentille plansphérique pour laquelle la face sphérique a été rendue réfléchissante au moyen d'un traitement aluminisé ou équivalent.

L'imageur 5 comporte également un traitement séparateur de polarisation 6 qui peut être réalisé sous forme d'un dépôt de couches minces, soit sur le prisme de propagation 5a, soit sur le contre-prisme 5b, soit au moyen d'un film collé entre les deux éléments précédemment cités.

L'imageur 5 est ici surmoulé dans une lentille 9 et le boîtier est disposé latéralement à cette lentille 9. Sur le même principe, le boîtier peut être disposé frontalement à l'arrière de la lentille, un élément d'injection formant élément réfléchissant à 90° étant alors inclus dans la lentille.

Le mot «lentille» concerne en particulier un verre, correcteur ou non, destiné à être monté dans une monture de lunettes. Ce verre de lunette ophtalmique présente des fonctionnalités traditionnelles que sont la correction de la vue, l'anti-reflet, l'anti-salissure, l'anti-rayure, par exemple.

Afin de permettre un réglage de la focalisation permettant d'ajuster la distance de visualisation de l'image informative et de la régler en conséquence afin de procurer au porteur une vision nette et confortable, la lentille 9 est solidaire d'une platine 10 portant deux tiges 10A, 10B sur lesquelles est emboîté et peut glisser le boîtier 4. Lors de ce réglage, le boîtier est plus ou moins emboîté manuellement sur les glissières pour régler la distance D et ensuite bloqué par une vis transversale non représentée.

Ce type de dispositif de réglage de la focalisation pose les problèmes techniques suivants.

Selon l'emboîtement, l'encombrement hors tout de l'afficheur varie. Ceci peut entraîner une contrainte dans sa réalisation.

Ce type de dispositif entraîne inévitablement beaucoup de jeu entre tiges et glissières, ce qui est préjudiciable à la précision de l'afficheur.

Le boîtier est en général en matière plastique et la platine 10 avec ses tiges 10A, 10B en métal. Il en résulte une usure rapide du boîtier augmentant encore le jeu et l'imprécision de l'afficheur.

Enfin, le réglage est effectué selon cet art antérieur manuellement, dans le sens où le porteur doit saisir le boîtier et le faire glisser sur les tiges jusqu'à obtention de la bonne focalisation. Il va de soi, qu'un tel agencement n'est pas très précis et d'utilisation très peu confortable, peu adapté à un usage courant non expérimental.

L'invention résout ces problèmes, tout en proposant un afficheur d'encombrement hors tout qui ne varie pas et présentant une manipulation de réglage confortable.

Pour ce faire, l'invention propose un afficheur ophtalmique comprenant un imageur optique destiné à mettre en forme des faisceaux optiques émis d'un élément optique d'un système de génération de faisceaux optiques et à les diriger vers l'oeil du porteur pour permettre la visualisation d'un contenu informationnel, cet afficheur étant équipé d'un dispositif de réglage de la focalisation par réglage de la longueur desdits faisceaux optiques entre ledit élément et l'imageur, ledit imageur étant intégré à un verre destiné à être monté dans une monture de lunettes, dans lequel ledit dispositif de réglage est interne à un boîtier contenant ledit système de génération de faisceaux optiques et en ce que ledit système de génération comprend une pièce fixe, dite platine fixe, à laquelle est relié ledit élément optique par une connexion mobile réglable grâce un dispositif d'actionnement. Ladite connexion est un élément élastiquement déformable.

Selon un mode de réalisation préféré, ledit élément optique est solidaire d'une seconde platine reliée à la première platine fixe par ladite connexion mobile.

Et avantageusement, ledit dispositif d'actionnement est extérieur au dit boîtier.

Selon l'invention, le boîtier n'assure qu'une fonction de protection aux agressions du milieu ambiant, aux chocs et aux écrasements ainsi qu'une fonction d'étanchéité, et est de préférence amovible, étant monté en dernier lieu. Le boîtier est avantageusement monté par fixation sur la pièce ou platine fixe.

Les caractéristiques dimensionnelles et le positionnement de cet élément déformable sont calculés par des méthodes de type calcul à éléments finis, afin de contrôler les caractéristiques du déplacement.

Selon un mode de réalisation particulier, ledit élément élastiquement déformable est constitué d'un étrier déformable.

Selon une première variante, ledit dispositif d'actionnement est constitué d'une molette pourvue d'un cylindre excentré, cette molette tournant sur une partie fixe du boîtier et ce cylindre excentré étant en butée contre ladite seconde platine.

Cette caractéristique présente l'avantage de pouvoir être automatiquement précontraint afin d'éviter tout jeu et de doser l'effort à exercer sur la molette pour faciliter le confort de l'utilisateur et éviter toute dégradation. Par ailleurs, par rotation de la molette toujours dans le même sens, il est obtenu toutes les positions souhaitées sur la trajectoire de la platine mobile. Enfin, de par sa relativement grande dimension, une molette est particulièrement adaptée à la réalisation de très petits déplacements précis.

Selon une seconde variante, ledit dispositif d'actionnement est constitué d'une vis vissée sur une partie fixe du boîtier et en butée contre ladite seconde platine.

Avantageusement, un adaptateur est référencé par rapport à l'imageur et reçoit ledit système de génération pourvu de son dispositif de réglage de la focalisation par emboîtement d'au moins deux plots.

Ce mode de réalisation présente l'avantage de découpler les différentes fonctions optiques et mécaniques. Chaque pièce n'a qu'une seule fonction, ce qui permet d'obtenir une précision maximale, tout autant sur le plan mécanique qu'optique. L'adaptateur assure le positionnement relatif du dispositif par rapport à l'imageur.

Et de préférence, ledit adaptateur est solidaire de ladite platine fixe.

La solidarisation de l'adaptateur avec la lentille peut être réalisée par collage, vissage ou tout moyen approprié.

La liaison entre ledit dispositif de réglage de la focalisation et ledit adapteur peut être amovible.

Ledit élément optique est de préférence un écran miniature

Dans ce cas, ladite pièce fixe porte avantageusement un composant optique associé.

Selon une application préférée, ledit imageur est intégré à une lentille.

L'invention est décrite ci-après plus en détail à l'aide de figures ne représentant qu'un mode de réalisation préféré de l'invention.
La figure 1, vue de dessus d'un afficheur connu, a déjà été précisée plus haut.
La figure 2 est une vue schématique de dessus d'un afficheur conforme à l'invention.
La figure 3 est une vue de face d'un dispositif de réglage de la focalisation d'un afficheur conforme à l'invention.
La figure 4 est une vue de dessus de ce même dispositif de réglage de la focalisation.
La figure 5 est une vue en perspective vue de l'arrière de ce même dispositif de réglage de la focalisation.
La figure 6 est une vue en perspective vue de dessous de ce même dispositif de réglage de la focalisation.
La figure 7 est une vue schématique d'une première variante de dispositif d'actionnement faisant partie d'un afficheur conforme à l'invention.
La figure 8 est une vue schématique d'une seconde variante de dispositif d'actionnement faisant partie d'un afficheur conforme à l'invention.

L'afficheur est donc représenté schématiquement sur la figure 2.

Cet afficheur ophtalmique comprend un imageur optique 10 destiné à mettre en forme des faisceaux optiques émis d'un écran miniature 20 disposé dans un boîtier 30 et à les diriger vers l'oeil du porteur O pour permettre la visualisation d'un contenu informationnel. L'imageur 10 est ici du même type que celui représenté sur la figure 1. Par contre, le boîtier 30 est disposé sur la face arrière de la lentille 11 portant cet imageur. Est donc également intégré dans la lentille un élément de réflexion 12 à 90° du faisceau de lumière, afin de diriger ce faisceau longitudinalement à l'imageur 10.

Cependant comme il sera facilement compris, l'invention s'applique tout autant à un imageur du type de celui représenté sur la figure 1 qu'à un imageur du type représenté sur la figure 2.

Tout d'abord, un adaptateur 13 est collé avec précision sur la lentille et sur cet adaptateur est fixé le dispositif de réglage comme il sera précisé plus loin. L'adaptateur 13 a deux côtés parfaitement perpendiculaires qui permettent son positionnement précis en vis à vis avec l'imageur et plus précisément en vis à vis de l'élément de réflexion 12.

Le dispositif de réglage comporte une platine 21 fixe à laquelle est relié l'écran miniature 20 par une connexion mobile réglable 22. Elle supporte également des composants optiques 23 ici schématisés. C'est à cette platine fixe 21 qu'est fixé l'adaptateur 13.

Par réglage de la connexion 22, par exemple de la position P1 à la position P2 où l'écran est représenté en pointillés, la longueur des faisceaux optiques entre l'écran et l'imageur est modifiée, et donc la focalisation est réglée permettant la visualisation de l'image I1 à une distante de l'oeil O supérieure, représentée en pointillés par l'image I2.

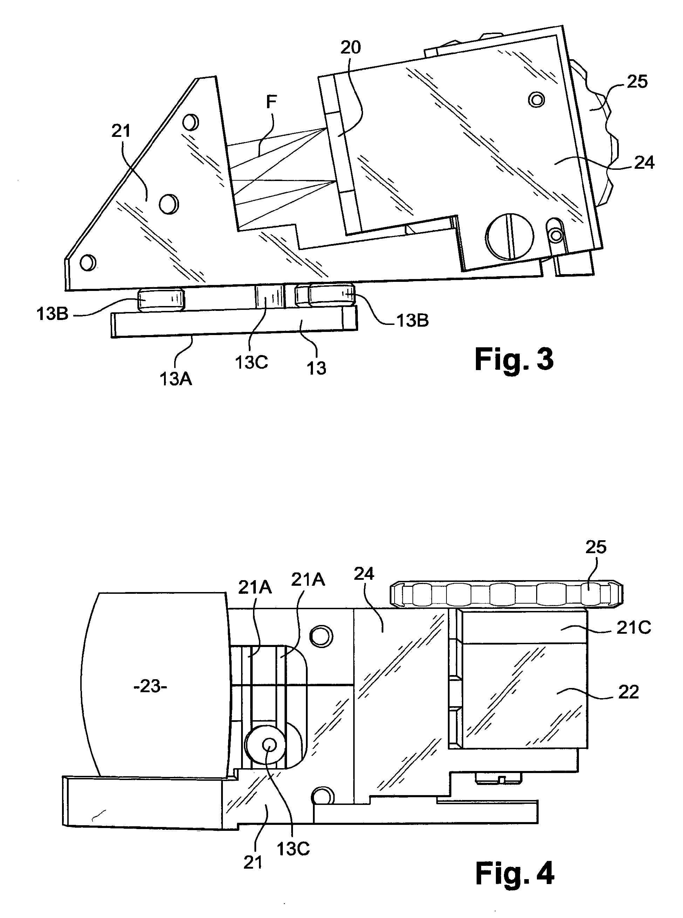

Ce dispositif de réglage de la focalisation est représenté précisément selon un mode de réalisation préféré sur les figures 3 à 6. Le boîtier 30 est ici non représenté.

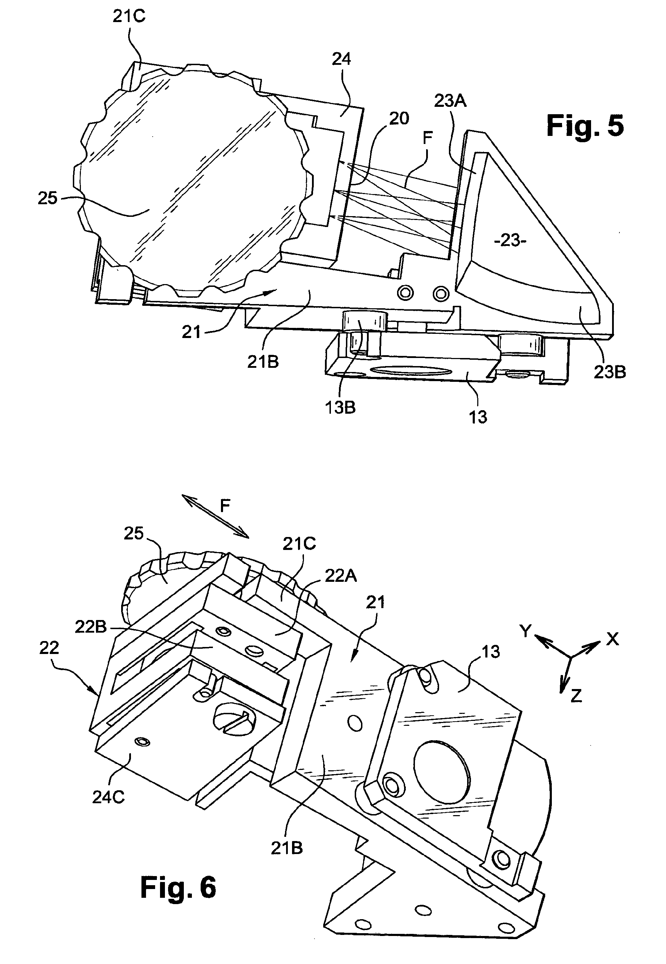

L'adaptateur 13 est une plaquette sensiblement carrée qui est destinée par sa face externe 13A à être collée sur la lentille. A cet adaptateur 13 est reliée la platine fixe 21 par l'intermédiaire de trois plots 13B venant s'emboîter dans des orifices correspondants de l'adaptateur, comme apparent sur la figure 5. Ces trois emboîtements assurent un positionnement relatif exact. Par ailleurs, l'adaptateur 13 comporte un pion de clipage 13 C venant s'encliqueter entre deux tiges 21A élastiques solidaires de la platine fixe 21 et assurant le maintien relatif et amovible de cette dernière sur l'adaptateur 13.

La platine fixe 21 porte quant à elle le composant optique en aval de l'écran miniature, plus précisément dans ce cas une lentille 23. Cette lentille 23 redirige les faisceaux de lumière F qu'elle reçoit de l'écran 20 par sa face 23A vers l'imageur inséré dans la lentille par sa face 23B.

Cet écran 20 est porté par une seconde platine 24 reliée à la première platine fixe 21 par une connexion mobile constituée d'un élément élastiquement déformable, afin de permettre le réglage de la distance entre l'écran 20 et la face 23A d'entrée de la lentille 23.

Pour ce faire, la platine fixe 21 comporte une base 21 B sensiblement parallèle à l'axe de la face d'entrée 23A de la lentille et une plaque 21 C perpendiculaire à cette base et disposée sur un de ses côtés. A cette plaque 21 C est reliée la première branche 22A d'un étrier déformable 22, dont l'autre branche 22B est reliée à une plaque 24C de la seconde platine 24. Ces liaisons sont particulièrement visibles sur la figure 6. Les plaques 21C et 24C comportent une fente à leur extrémité dans laquelle est emboîté un pion porté quant à lui par chacune des branches 22A et 22B.

Ces branches 22A et 22B peuvent se déplacer relativement selon la flèche F grâce à un dispositif d'actionnement extérieur au dit boîtier, constitué ici d'une molette 25.

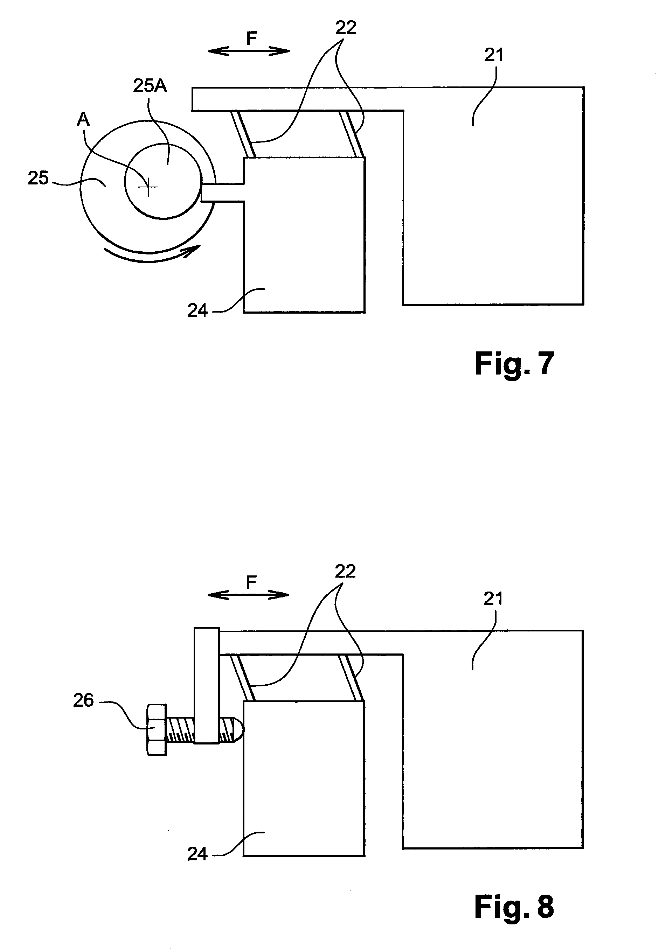

Bien que visible uniquement de l'extérieur sur les figures 3 à 6, ce dispositif d'actionnement par molette 25 est schématisé sur la figure 7 et sera ainsi compris par l'homme du métier.

Sur cette figure, sont schématisés la platine fixe 21, la seconde platine mobile 24 et l'élément élastiquement déformable 22.

La molette 25 peut être tournée autour de son axe A de rotation et porte un cylindre excentré 25A qui est quant à lui en butée contre une face de la seconde platine 24. Comme précisément représenté sur la figure 7, lors d'un tour de la molette, ce cylindre pousse la seconde platine 24 puis la relâche, la seconde platine revenant alors dans l'autre sens grâce à l'élasticité de la connexion 22 et restant en butée contre le cylindre 25A.

En variante, il est possible d'utiliser une vis au lieu d'une molette comme schématisé sur la figure 8 ou plus généralement une butée réglable. Une vis 26 est alors vissée dans un alésage taraudé solidaire de la platine fixe 21 et son extrémité est en butée contre une face de la platine mobile 24.

Bien que le boîtier 30 ne soit pas représenté sur les figures 3 à 6, la platine fixe 21 et la seconde platine 24 sont contenues dans ce boîtier comme schématisé sur la figure 2.

Dans le mode de réalisation décrit, c'est l'écran miniature qui est l'élément optique relié à la platine fixe par une connexion mobile réglable grâce un dispositif d'actionnement extérieur au dit boîtier.

Dans le cadre de l'invention, ce peut être le composant optique que constitue par exemple la lentille 23 ou l'ensemble écran et lentille dont la position soit réglable grâce à une connexion mobile réglable. Le but est dans tous les cas de faire varier la distance optique c'est-à-dire la longueur des faisceaux optiques traités par l'afficheur.

## Revendications

1. Afficheur ophtalmique comprenant un imageur optique (10) destiné à mettre en forme des faisceaux optiques émis d'un élément optique d'un système de génération de faisceaux optiques et à les diriger vers l'oeil (O) du porteur pour permettre la visualisation d'un contenu informationnel (I1,I2), cet afficheur étant équipé d'un dispositif de réglage de la focalisation par réglage de la longueur desdits faisceaux optiques entre ledit élément et l'imageur, ledit imageur étant intégré à un verre destiné à être monté dans une monture de lunettes et ledit système de génération comprenant une pièce fixe, dite platine fixe, (21) à laquelle est relié ledit élément optique par une connexion (22) mobile réglable grâce à un dispositif d'actionnement, afficheur **caractérisé en ce que** ledit dispositif de réglage est interne à un boîtier (30) contenant ledit système de génération de faisceaux optiques (F) et **en ce que** ladite connexion est un élément élastiquement déformable (22).

2. Afficheur selon la revendication 1, **caractérisé en ce que** ledit élément optique est solidaire d'une seconde platine (24) reliée à la première platine fixe (21) par ladite connexion mobile.

3. Afficheur selon la revendication 1 ou 2, **caractérisé en ce que** ledit dispositif d'actionnement est extérieur au dit boîtier (30).

4. Afficheur selon l'une des revendications précédentes, **caractérisé en ce que** ledit élément élastiquement déformable est constitué d'un étrier déformable (22).

5. Afficheur selon l'une des revendications précédentes, **caractérisé en ce que** ledit dispositif d'actionnement est constitué d'une molette (25) pourvue d'un cylindre excentré (25A), cette molette tournant sur une partie fixe du boîtier (30) et ce cylindre excentré étant en butée contre ladite seconde platine (24).

6. Afficheur selon l'une des revendications 1 à 4, **caractérisé en ce que** ledit dispositif d'actionnement est constitué d'une vis (26) vissée sur une partie fixe du boîtier (30) et en butée contre ladite seconde platine (24).

7. Afficheur selon l'une des revendications précédentes, **caractérisé en ce qu'**un adaptateur (13) est référencé par rapport à l'imageur et reçoit ledit système de génération pourvu de son dispositif de réglage de la focalisation par emboîtement d'au moins deux plots (13B).

8. Afficheur selon la revendication précédente, **caractérisé en ce que** ledit adaptateur est solidaire de ladite platine fixe (21).

9. Afficheur selon la revendication 7 ou 8, **caractérisé en ce que** la liaison entre ledit système et ledit adaptateur (13) est amovible.

10. Afficheur selon l'une des revendications précédentes, **caractérisé en ce que** ledit élément optique est un écran miniature (20).

11. Afficheur selon la revendication précédente, **caractérisé en ce que** ladite platine fixe (21) porte un composant optique associé (23).

## Patentansprüche

1. Ophthalmische Anzeigeeinrichtung, die einen optischen Bildgeber (10) umfasst, der dazu bestimmt ist, optische Strahlenbündel, die von einem optischen Element eines Systems für die Erzeugung optischer Strahlenbündel ausgesendet werden, zu formen und sie auf das Auge (O) des Trägers zu richten, um die Anzeige eines Informationsinhalts (1, J2) zu ermöglichen, wobei diese Anzeigeeinrichtung mit einer Vorrichtung zum Regulieren der Fokussierung durch Regulieren der Länge der optischen Strahlenbündel zwischen dem Element und dem Bildgeber ausgerüstet ist, wobei der Bildgeber in ein Glas integriert ist, das dazu bestimmt ist, in einem Brillengestell montiert zu werden, und wobei das Erzeugungssystem ein festes Teil, das feste Platine (21) genannt wird, umfasst, mit dem das optische Element über eine bewegliche Verbindung (22) verbunden ist, die kraft einer Betätigungsvorrichtung regulierbar ist, wobei die Anzeigeeinrichtung **dadurch gekennzeichnet ist, dass** sich die Regulierungsvorrichtung innerhalb eines Gehäuses (30) befindet, die das System für die Erzeugung optischer Strahlenbündel enthält, und dass die Verbindung ein verformbares elastisches Element (22) ist.

2. Anzeigeeinrichtung nach Anspruch 1, **dadurch gekennzeichnet, dass** das optische Element mit einer zweiten Platine (24) fest verbunden ist, die mit der ersten festen Platine (21) durch die bewegliche Verbindung verbunden ist.

3. Anzeigeeinrichtung nach Anspruch 1 oder 2, **dadurch gekennzeichnet, dass** sich die Betätigungsvorrichtung außerhalb des Gehäuses (30) befindet.

4. Anzeigeeinrichtung nach einem der vorhergehenden Ansprüche, **dadurch gekennzeichnet, dass** das verformbare elastische Element aus einem verformbaren Bügel (22) gebildet ist.

5. Anzeigeeinrichtung nach einem der vorhergehenden Ansprüche, **dadurch gekennzeichnet, dass** die Betätigungsvorrichtung aus einer Rolle (25) gebildet ist, die mit einem exzentrischen Zylinder (25A) versehen ist, wobei sich diese Rolle um einen festen Teil des Gehäuses (30) dreht und dieser exzentrische Zylinder an der zweiten Platine (24) in Anschlag ist.

6. Anzeigeeinrichtung nach einem der Ansprüche 1 bis 4, **dadurch gekennzeichnet, dass** die Betätigungsvorrichtung aus einer Schraube (26) gebildet ist, die in einen festen Teil des Gehäuses (30) geschraubt ist und an der zweiten Platine (24) in Anschlag ist.

7. Anzeigeeinrichtung nach einem der vorhergehenden Ansprüche, **dadurch gekennzeichnet, dass** eine Anpassungseinrichtung (13) in Bezug auf den Bildgeber referenziert wird und das Erzeugungssystem, das mit seiner Vorrichtung zum Regulieren der Fokussierung versehen ist, durch Aufsetzen von wenigstens zwei Höckern (13B) aufnimmt.

8. Anzeigeeinrichtung nach dem vorhergehenden Anspruch, **dadurch gekennzeichnet, dass** die Anpassungseinrichtung mit der festen Platine (21) fest verbunden ist.

9. Anzeigeeinrichtung nach Anspruch 7 oder 8, **dadurch gekennzeichnet, dass** die Verbindung zwischen dem System und der Anpassungseinrichtung (13) lösbar ist.

10. Anzeigeeinrichtung nach einem der vorhergehenden Ansprüche, **dadurch gekennzeichnet, dass** das optische Element ein Miniaturbildschirm (20) ist.

11. Anzeigeeinrichtung nach dem vorhergehenden Anspruch, **dadurch gekennzeichnet, dass** die feste Platine (21) eine zugeordnete optische Komponente (23) trägt.

## Claims

1. Ophthalmic display comprising an optical imager (10) intended to shape optical beams emitted by an optical element of a system for generating optical beams and to direct them towards the eye (O) of the wearer in order to allow him or her to see informational content (I1, 12), this display being equipped with a device for adjusting focus by adjusting the length of said optical beams between said element and the imager, said imager being integrated into a glass intended to be fitted in a spectacle frame and said generating system comprising a stationary part, called the stationary plate, (21) to which said optical element is connected by a movable connection (22) that is adjustable by virtue of an actuating device, said display being **characterized in that** said adjusting device is inside a casing (30) containing said system for generating optical beams (F) and **in that** said connection is an elastically deformable element (22).

2. Display according to Claim 1, **characterized in that** said optical element is securely fastened to a second plate (24) that is connected to the stationary first plate (21) by said movable connection.

3. Display according to Claim 1 or 2, **characterized in that** said actuating device is outside the casing (30).

4. Display according to one of the preceding claims, **characterized in that** said elastically deformable element consists of a deformable stirrup (22).

5. Display according to one of the preceding claims, **characterized in that** said actuating device consists of a knurling wheel (25) provided with an eccentric cylinder (25A), this knurling wheel rotating on a stationary portion of the casing (30) and the eccentric cylinder bearing against said second plate (24).

6. Display according to one of Claims 1 to 4, **characterized in that** said actuating device consists of a screw (26) screwed into a stationary portion of the casing (30) and bearing against said second plate (24).

7. Display according to one of the preceding claims, **characterized in that** an adapter (13) is referenced relative to the imager and is coupled to said generating system provided with its device for adjusting focus via at least two pads (13B).

8. Display according to the preceding claim, **characterized in that** said adapter is securely fastened to said stationary plate (21).

9. Display according to Claim 7 or 8, **characterized in that** said adapter (13) is removably joined to said system.

10. Display according to one of the preceding claims, **characterized in that** said optical element is a miniature screen (20).

11. Display according to the preceding claim, **characterized in that** said stationary plate (21) bears an associated optical component (23).
